# EUROPÄISCHE PATENTSCHRIFT

(11) **EP 3 105 077 B1**
(45) Veröffentlichungstag und Bekanntmachung des Hinweises auf die Patenterteilung: **11.11.2020**
(21) Anmeldenummer: 15702699.8
(22) Anmeldetag: 27.01.2015
(51) Int. Cl.: B60K 37/06, G06F 3/01

(54) **VORRICHTUNG UND VERFAHREN ZUR SIGNALISIERUNG EINER ERFOLGREICHEN GESTENEINGABE**
DEVICE AND METHOD FOR SIGNALLING A SUCCESSFUL GESTURE INPUT
DISPOSITIF ET PROCÉDÉ POUR SIGNALER UNE SAISIE GESTUELLE RÉUSSIE

(30) Priorität: 12.02.2014 DE 102014202490
(43) Veröffentlichungstag der Anmeldung: 21.12.2016
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE)
(86) Internationale Anmeldenummer: PCT/EP2015/051555
(87) Internationale Veröffentlichungsnummer: WO 2015/121056

(56) Entgegenhaltungen:
- EP-A1- 1 645 944
- US-A1- 2012 119 991

## Beschreibung

### Stand der Technik

Die vorliegende Erfindung betrifft eine Vorrichtung sowie ein Verfahren zur Signalisierung einer erfolgreichen Gesteneingabe. Insbesondere betrifft die vorliegende Erfindung die Erzeugung einer solchen Signalisierung, welche unabhängig von einer im Ansprechen auf die Geste ausgeführten Funktion eine schnelle und intuitive Rückmeldung an den Anwender ermöglicht. Im Rahmen der vorliegenden Erfindung werden dabei insbesondere berührungslos erfolgende Gesten quittiert.

Im Stand der Technik ist es bekannt, Anwendern eine Rückmeldung auf Eingaben auszugeben, welche der Anwender über eine Mensch-Maschine-Schnittstelle (MMS, Human Machine Interface HMI) eingegeben hat, indem beispielsweise eine bediente Schaltfläche kurzzeitig ihre Darstellung ändert und/oder ein Klickgeräusch über einen Schallwandler ausgegeben wird. Für die Eingabe berührungslos erfolgender Gesten (frei im Raum und ohne Kontakt zu einer Eingabeeinrichtung erfolgende Gesten, 3D-Gesten) haben sich bislang keine allgemeingültigen Signalformen für die Signalisierung erfolgreicher Eingaben herauskristallisiert.

DE 10 2011 053 449 A1 beschreibt eine Mensch-Maschine-Schnittstelle auf Gestenbasis für Fahrzeuge, bei welcher auf ein Anzeigeelement gerichtete Gesten eines Anwenders erkannt werden. Hierbei wird vorgeschlagen, ein visuelles Symbol oder einen Zeiger auf der Anzeige zu präsentieren, um dem Benutzer einen visuellen Hinweis zur Position des aktuellen Eingabefokus in einer Eingabe zu liefern. Zudem werden Vorschläge gemacht, durch welche per Gesteneingabe bezeichnete Schaltflächen anderen Bildschirminhalten gegenüber hervorgehoben werden können.

DE 10 2012 000 201 A1 offenbart Verfahren und Vorrichtungen zum Zoomen auf einer Anzeigeeinheit eines Fahrzeugs angezeigter Funktionen unter Verwendung von im dreidimensionalen Raum ausgeführten Gesten. Um den Anwender auf die Gestenbedienung der Vorrichtung anzulernen, wird vorgeschlagen, ein Fenster auf einer Anzeige anzuzeigen, welches ein Erfassen einer ersten vorbestimmten Geste anzeigt. Das Fenster zeigt zudem Bedienrichtungen für weitere Eingaben an.

US 2012/0119991 A1 offenbart ein Verfahren zur 3D-Gestensteuerung und eine entsprechende Vorrichtung. Ein zur Gesteneingabe verwendeter Controller ("control article") wird von einem Sensor hinsichtlich seines Bewegungsbereiches ("moving ränge") und seiner Bewegungsgeschwindigkeit ("speed") und zur Ermittlung von Trajektorien für auf einem Bildschirm angezeigte Objekte ("visible object") verwendet.

EP 1 645 944 A1 offenbart eine Anwenderschnittstelle, bei welcher dreidimensionale Gesten beispielsweise zur Anpassung eines balkenförmig dargestellten Audiowiedergabelevels verwendet werden.

DE 10 2012 000 201 A1 offenbart Verfahren und Vorrichtungen zum Zoomen auf einer Anzeigeeinheit eines Fahrzeugs angezeigter Funktionen unter Verwendung von im dreidimensionalen Raum ausgeführten Gesten. Um den Anwender auf die Gestenbedienung der Vorrichtung anzulernen, wird vorgeschlagen, ein Fenster auf einer Anzeige anzuzeigen, welches ein Erfassen einer ersten vorbestimmten Geste anzeigt. Das Fenster zeigt zudem Bedienrichtungen für weitere Eingaben an.

Während die vorliegende Erfindung sich nicht alleine auf die Bedienung von HMIs in Fahrtfolgen beschränkt, ist insbesondere bei der Bedienung solcher HMIs ein geringes Ablenkungspotential durch Signalisierungen an den Anwender zur Sicherstellung der Verkehrssicherheit erforderlich. Schließlich können auf einer Anzeigeeinrichtung dargestellte Informationen fahrsicherheitsrelevant sein und sollten durch die Quittierung einer Anwendereingabe möglichst wenig verdeckt werden. Es ist daher eine Aufgabe der vorliegenden Erfindung, den vorgenannten Bedarf zu stillen.

### Offenbarung der Erfindung

Die vorstehend genannte Aufgabe wird erfindungsgemäß durch ein Verfahren mit den Merkmalen gemäß Anspruch 1 sowie eine Vorrichtung mit den Merkmalen gemäß Anspruch 9 gelöst. Weiter werden ein Computerprogrammprodukt und ein Fortbewegungsmittel vorgeschlagen, welche die vorstehend genannte Aufgabe lösen.

Das erfindungsgemäße Verfahren dient der Signalisierung einer erfolgreichen Gesteneingabe durch einen Anwender. Die Gesteneingabe kann beispielsweise als berührungslos ("frei im Raum") vorgenommene Geste durchgeführt werden. Zur Signalisierung einer erfolgreichen Erkennung einer solchen Geste muss die Geste des Anwenders zunächst sensorisch erfasst werden. Anschließend wird die Geste klassifiziert, wobei beispielsweise eine Hauptbewegungsrichtung und/oder eine Handausrichtung o.Ä. erkannt und mit vordefinierten Referenzen verglichen werden. Im Ergebnis wird die Geste als einer der Referenzen nächstkommend kategorisiert.

Erfindungsgemäß wird die ermittelte Klasse ("das Ergebnis der Kategorisierung") durch Erzeugen einer Animation signalisiert, welche eine zumindest abschnittsweise linear veränderliche Position entlang eines Randes eines der Gesteneingabe zugeordneten Bildschirms optisch hervorhebt. Der Bildschirm kann beispielsweise einem mobilen elektronischen Gerät (z.B. ein Tablet-Rechner, ein Smart Phone, ein PDA o.Ä.) zugehören. Alternativ kann auch ein fest in einem Fortbewegungsmittel installiertes Anzeigeelement als erfindungsgemäßer Bildschirm dienen. Solche Anzeigeelemente sind beispielsweise zentral im Armaturenbrett oder als Kombiinstrument im Bereich hinter dem Lenkrad verbaut. Die Animation kann entweder auf dem Bildschirm selbst oder im Bereich zumindest eines Randes des Bildschirms ausgegeben werden. Sie kann eine zumindest abschnittsweise oder vollständig linear gestaltete Trajektorie umfassen. Zudem können mehrere Animationen verwendet werden, wobei deren Bewegungsrichtungen parallel, antiparallel oder senkrecht zueinander orientiert sein können. Durch die erfindungsgemäße Verwendung im Randbereich des Bildschirms angezeigter Animationen ist unabhängig von einer durch die Geste gestarteten Funktion eine Signalisierung ihrer erfolgreichen Erkennung ohne erhöhtes Ablenkungspotential für den Anwender möglich.

Die Unteransprüche zeigen bevorzugte Weiterbildungen der Erfindung.

Bevorzugt kann für eine jede Gestenklasse eine vordefinierte Trajektorie für die Animation bzw. die hervorgehobene Position vordefiniert sein. Insbesondere ist eine Hauptbewegungsrichtung der Animation parallel zum Rand des der Gesteneingabe zugeordneten Bildschirms orientiert. Auch ein lediglich anteiliges Überstreichen der Länge des jeweiligen Randes ist möglich. Beispielsweise ist für eine negative Rückmeldung für den Fall, dass die erkannte Geste keine Funktion auslösen kann, eine Trajektorie möglich, aus welcher die hervorgehobene Position lediglich bis zu einer vorbestimmten Position im Randbereich in einer ersten Richtung verändert wird und anschließend stoppt oder den selben Weg in umgekehrter Richtung zurückläuft. Erfindungsgemäß wird die vordefinierte Trajektorie jedoch nicht durch die tatsächliche Form der ausgeführten Geste bestimmt, wie dies mitunter im Stand der Technik vorgeschlagen wird, sondern orientiert sich an deren Hauptbewegungsrichtung. Insofern als die vordefinierte Trajektorie somit bevorzugt stets identisch bzw. stets vergleichbar ausgestaltet ist, ist die Signalisierung der ermittelten Klasse für den Anwender besonders schnell interpretierbar, wodurch der Anwender von der Wahrnehmung der Aufgabe der Führung des Fortbewegungsmittels nur geringfügig abgelenkt wird. Ganz im Gegenteil kann die vorliegende Erfindung Momente der Ungewissheit des Anwenders ausräumen, in welchem er sich über die erfolgreiche Eingabe seiner Geste im Unklaren ist. Die Fahrsicherheit kann gegenüber bekannten Systemen zur Gesteneingabe entsprechend signifikant erhöht werden. Da die Auswertung und Klassifizierung der Geste nur anhand der Hauptbewegungsrichtung erfolgt, kann überdies eine besonders kurze Latenz realisiert werden.

Bevorzugt erfolgt das Klassifizieren zumindest hinsichtlich einer Hauptbewegungsrichtung der Geste. Diese kann beispielsweise bezüglich einer Ausrichtung des verwendeten Sensors und/oder bezüglich des verwendeten Bildschirms als "vertikal", "horizontal" oder in die Anzeigeebene des Bildschirms hinein oder heraus definiert sein. Während vertikale und horizontale Gesten auch als "Wischgesten" bezeichnet werden, werden Bewegungen in Richtung senkrecht zur Oberfläche des Bildschirms meist als "Eingabe-" oder "Klick"-Gesten bezeichnet. Alternativ oder zusätzlich kann das Signalisieren entlang einer durch die ermittelte Klasse definierte Hauptbewegungsrichtung vorgegebenen Trajektorie erfolgen. Mit anderen Worten "läuft" die Animation in eine der Hauptbewegungsrichtung der Geste entsprechende Richtung, sofern eine vertikale oder eine horizontale Wischgeste detektiert und klassifiziert worden ist. Es ergibt sich durch die Animation eine Art Schweif für die Hand des Anwenders (oder eines alternativen Eingabemittels) bei der Ausführung der Geste. Bei einem Ausbleiben des Schweifes weiß der Anwender sofort, dass die verwendete Sensorik die Geste nicht erfassen oder die verwendete Auswertelogik die Geste nicht eindeutig klassifizieren konnte. Die vorgenannte Ausgestaltung ermöglicht eine besonders intuitiv erfassbare Bedeutung der Signalisierung.

Die Animation kann beispielsweise auf dem Bildschirm dargestellt werden, auf welchem die durch die Geste zu beeinflussenden Funktionen veranschaulicht werden. In diesem Fall wird die Animation durch Pixel desselben Bildschirms dargestellt, welche sich im Randbereich der Pixelmatrix befinden. Alternativ oder zusätzlich können separate, benachbart zum Bildschirm angeordnete Leuchtelemente verwendet werden, welche ein jeweiliges Leuchtmittel oder mehrere Leuchtmittel umfassen. Zur Gestaltung der erfindungsgemäßen Animation kann nun ein jeweiliges Leuchtmittel der Leuchtelemente zum optischen Hervorheben einer jeweiligen veränderlichen Position mit elektrischer Energie versorgt werden. Durch ein sequentielles Versorgen mit Energie kann auch hierbei der Eindruck eines die Geste des Anwenders begleitenden Schweifes erzeugt werden. Die Leuchtelemente können hierzu insbesondere parallel zu jeweiligen Rändern des Bildschirms orientiert sein. Um den Bezug der Leuchtelemente zum Bildschirm zu betonen, sollte der Abstand zwischen den Leuchtelementen und dem Bildschirm möglichst klein gewählt werden und insbesondere einen Abstand von 5 cm, bevorzugt 2 cm, äußerst bevorzugt 1 cm, nicht überschreiten. Hierdurch wird die intuitive Interpretation der Signalisierung noch einfacher möglich.

Bevorzugt kann die Animation einen Bereich erhöhter Helligkeit aufweisen, der die veränderliche Position optisch hervorhebt. Die Helligkeit kann als farbliche Veränderung eines Pixels/Leuchtmittels, Veränderung der optischen Intensität bzw. der Helligkeit der jeweiligen Pixel/Leuchtmittel o.Ä. erfolgen. Insbesondere kann diese Maßnahme in eine optisch ansprechende Gestaltung eingebettet sein. Zur besseren optischen Verfolgbarkeit der Animation können weiter von der Position durchquerte Bereiche nach Art eines Kometenschweifes bzw. nach Art eines Kondensstreifens eines Flugzeuges in abnehmendem Maße nachleuchten. Dies ermöglicht die Realisierung sehr schmaler und dennoch gut optische wahrnehmbarer Animationsformen, welche die Anzeigefläche des Bildschirms nur zu geringen Prozentsätzen in Beschlag nehmen. Durch die Verwendung eines Nachleuchtens kann die optische Erkennbarkeit der Animation besonders gut sichergestellt werden. Hierdurch wird einerseits die Nutzung der zur Verfügung stehenden Bildschirmfläche verbessert, andererseits das Ablenkungspotential der erfindungsgemäßen Signalisierung von sonstigen Bildschirminhalten vermindert.

Bevorzugt kann die Animation eine Ausdehnung aufweisen, welche kleiner als ein Fünftel, insbesondere kleiner als ein Siebtel, bevorzugt sogar kleiner als ein Neuntel der Länge des Bildschirms senkrecht zur Richtung des Animationsverlaufes beträgt. Eine derart schmale Ausgestaltung der Animation überdeckt nur sehr wenig sonstige Anzeigeelemente auf dem Bildschirm. Sofern separate Leuchtelemente zur Darstellung der Animation verwendet werden, benötigen diese nur sehr wenig Platz im um den Bildschirm angeordneten Bereich (z.B. ein Gehäuse, ein Armaturenbrett o.Ä.).

Obwohl die erfindungsgemäße Animation grundsätzlich unabhängig von der Tatsache ausgeführt wird, ob im Ansprechen auf die erkannte Geste eine anwendungsbezogene Funktion ausgeführt werden kann, kann die Animation in Abhängigkeit dieser Tatsache unterschiedlich ausgestaltet sein. Auf diese Weise wird es möglich, dem Anwender einerseits die korrekte Erkennung der durchgeführten Geste zu signalisieren, andererseits mitzuteilen, dass eine erneute Eingabe derselben Geste nicht die beabsichtigte Funktion der HMI (z.B. ein Blättern durch eine Liste/Reihung) starten kann. Auf diese Weise kann unabhängig von üblicherweise sehr unterschiedlich ausfallenden optischen Rückmeldungen zum Start einer Funktion eine einheitliche Signalisierung dahingehend erzeugt werden, ob die durchgeführte Geste grundsätzlich erfolgreich erkannt worden ist und ob sie einen Funktionsstart bewirkt hat.

Eine Unterscheidung zwischen einem erfolgreichen Start und einem erfolglosen Startversuch einer mit der erkannten Geste assoziierten Funktion kann beispielsweise durch Verwendung einer ersten Farbgebung für die Animation und/oder durch eine vordefinierte erste Trajektorie für die Animation realisiert werden. Beispielsweise kann eine blaue oder eine grüne Farbgebung für die Animation einen erfolgreichen Funktionsaufruf symbolisieren und/oder eine im Wesentlichen einer gesamten Länge eines Randes des Bildschirms folgende Trajektorie, aufweisen. Demgegenüber kann für den Fall, dass eine anwendungsbezogene Funktion nicht ausgeführt werden kann (z.B. weil eine solche Geste nicht mit einer solchen Funktion assoziiert ist oder das Ende einer per Wischgeste anwählbaren Reihung erreicht ist) die Animation durch eine zweite Farbgebung (z.B. Grau, Rot, o.Ä.) und alternativ oder zusätzlich durch eine zweite, von der ersten Trajektorie unterschiedliche Trajektorie eine optische Unterscheidung der erfindungsgemäßen Animation realisiert werden. Die zweite Trajektorie kann beispielsweise dadurch von der ersten Trajektorie unterschieden werden, dass die Animation ab einer vordefinierten Position stoppt oder ihre Laufrichtung umkehrt. Auf diese Weise wird dem Anwender visualisiert, dass die Geste zwar als Wischgeste erkannt worden ist, jedoch ein mit dieser verbundener gewünschter Funktionsaufruf nicht erfolgen konnte. Die Position, an welcher die Animation umkehrt, kann beispielsweise die Mitte des betrachteten Randes sein.

Gemäß einem zweiten Aspekt der vorliegenden Erfindung wird eine Vorrichtung vorgeschlagen, welche eine erste Anzeigeeinheit, eine Sensorik und eine Auswerteeinheit umfasst. Die erste Anzeigeeinheit kann entweder als Bildschirm oder als Leuchtelement im Sinne des vorstehend beschriebenen ersten Erfindungsaspektes verstanden werden. Die Sensorik ist zur Erkennung frei im Raum durchgeführter Anwendergesten eingerichtet. Sie kann beispielsweise eine Infrarot-LED-Anordnung umfassen, deren Licht von der Hand des Anwenders reflektiert und durch geeignete Sensoren erfasst wird. Die Auswertung erfolgt in der Auswerteeinheit, welche beispielsweise als elektronisches Steuergerät ausgestaltet sein kann. Solche Steuergeräte umfassen mitunter programmierbare Prozessoren, deren Rechenleistung durch unterschiedliche Instanzen eines elektronischen Gerätes oder eines Bordnetzes genutzt werden. Die Sensorik ist eingerichtet, eine Geste eines Anwenders zumindest dann zu erfassen, wenn sie als 3D-Geste innerhalb eines vordefinierten Raumbereiches ausgeführt wird. Die Auswerteeinheit kann die Geste klassifizieren und die erfassten Signale hierzu mit abgespeicherten Referenzen vergleichen. Nach dem Klassifizieren kann die erste Anzeigeeinheit entsprechend dem oben beschriebenen Verfahren die ermittelte Klasse durch Erzeugen einer Animation signalisieren, welche eine zumindest abschnittsweise linear veränderliche Position optisch hervorhebt. Die Merkmale, Merkmalskombinationen und die sich aus diesen ergebenden Vorteile entsprechen den in Verbindung mit dem erstgenannten Erfindungsaspekt Genannten derart ersichtlich, dass zur Vermeidung von Wiederholungen auf die obigen Ausführungen verwiesen wird.

Beispielsweise kann die erste Anzeigeeinheit einen Bildschirm umfassen und die Animation auf diesem Bildschirm anzeigen. Dabei kann entsprechend den obigen Ausführungen die linear veränderliche Position entlang zumindest eines Randes des Bildschirms angezeigt werden. Alternativ oder zusätzlich können weitere Anzeigeeinheiten um den Bildschirm herum angeordnet sein, welche zur Darstellung der Animation (zusätzlich) eingerichtet sind. Beispielsweise kann ein jeder Rand des Bildschirms durch eine weitere Anzeigeeinheit in Form einer Leiste, umfassend zumindest ein Leuchtmittel, gesäumt sein. Als Leuchtmittel kommen beispielsweise einzelne LEDs in Frage, deren Lichtausschüttung beispielsweise durch einen optischen Diffusor als Oberfläche des Leuchtelementes verteilt wird. Auf diese Weise kann eine Corona um die optisch hervorgehobene Position (das aktivierte Leuchtmittel) erzeugt werden. Es ergibt sich eine optisch unaufdringliche Lichtverteilung, welche den Anwender möglichst wenig von seiner Fahraufgabe ablenkt.

Gemäß einem dritten Aspekt der vorliegenden Erfindung wird ein Computerprogrammprodukt (z.B. ein Datenspeicher) vorgeschlagen, auf welchem Instruktionen gespeichert sind, die einen programmierbaren Prozessor in die Lage versetzen, die Schritte eines Verfahrens gemäß dem erstgenannten Erfindungsaspekt durchzuführen. Das Computerprogrammprodukt kann als CD, DVD, Blue-Ray-Disk, Flash-Speicher, Festplatte, RAM/ROM, Cache etc., ausgestaltet sein.

Gemäß einem vierten Aspekt der vorliegenden Erfindung wird ein Fortbewegungsmittel (z.B. ein Fahrzeug, ein Flugzeug o.Ä.) vorgeschlagen, welches eine Vorrichtung gemäß dem zweitgenannten Erfindungsaspekt umfasst. Dabei kann die Vorrichtung insbesondere für den Führer des Fortbewegungsmittels vorgesehen sein, mittels welcher der Führer während der Führung des Fortbewegungsmittels mit dem Fortbewegungsmittel und seinen technischen Einrichtungen kommunizieren kann. Die Merkmale, die Merkmalskombinationen sowie die sich aus diesen ergebenden Vorteile entsprechen den in Verbindung mit dem erst- und zweitgenannten Erfindungsaspekt Ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Darstellung einer erfindungsgemäß signalisierbaren ersten Geste;
- Figur 2: eine schematische Darstellung einer erfindungsgemäß signalisierbaren zweiten Geste;
- Figur 3: eine schematische Darstellung einer erfindungsgemäß signalisierbaren dritten Geste;
- Figur 4: eine schematische Übersicht über Komponenten eines Ausführungsbeispiels eines erfindungsgemäßen Fortbewegungsmittels;
- Figur 5: ein Flussdiagramm veranschaulichend Schritte eines Ausführungsbeispiels eines erfindungsgemäßen Verfahrens;
- Figur 6/Figur 7: eine Veranschaulichung eines Bedienschrittes eines erfolgreichen Funktionsaufrufes durch eine erfindungsgemäß signalisierte Geste;
- Figur 8/Figur 9: eine Veranschaulichung eines Bedienschrittes eines erfolglosen Funktionsaufrufes durch eine erfindungsgemäß signalisierte Geste;
- Figur 10/Figur 11: eine Veranschaulichung eines zweiten erfolgreichen Funktionsaufrufes einer erfindungsgemäß erkannten und signalisierten Geste;
- Figur 12: eine Frontalansicht eines alternativen Ausführungsbeispiels erfindungsgemäß verwendbarer Anzeigeeinheiten; und
- Figur 13: eine Veranschaulichung eines erfolgreichen Funktionsaufrufes nach Bedienung der in Figur 12 dargestellten Anordnung.

### Ausführungsformen der Erfindung

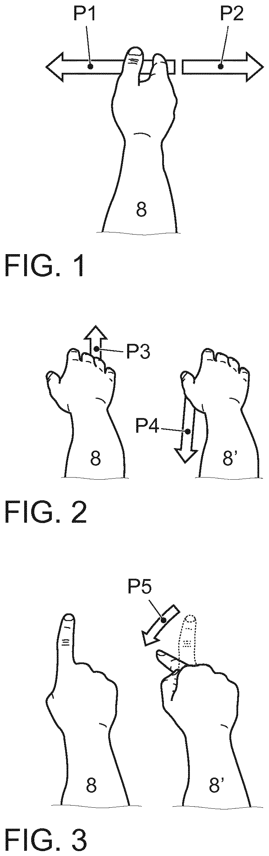

Figur 1 stellt zwei erste Möglichkeiten erfindungsgemäß erkannter Klassen für mittels einer Hand 8 eines Anwenders aufgeführte 3D-Gesten dar. Ein erster Pfeil P1 symbolisiert eine horizontale Wischgeste nach links, während ein zweiter horizontaler Pfeil P2 eine horizontale Wischgeste nach rechts repräsentiert. Der Handrücken des Anwenders ist hierbei im Wesentlichen vertikal orientiert.

Figur 2 veranschaulicht zwei weitere mögliche Klassen erfindungsgemäß erkannter Gesten einer Hand 8, 8' eines Anwenders, wobei ein erster Pfeil P3 eine vertikale Wischgeste nach oben und ein zweiter vertikaler Pfeil P4 eine vertikale Wischgeste nach unten repräsentieren. Der Handrücken des Anwenders ist hierbei im Wesentlichen horizontal orientiert.

Figur 3 veranschaulicht eine weitere Klasse einer erfindungsgemäß erkennbaren Geste einer Hand 8, 8' eines Anwenders. Ausgehend von der links im Bild dargestellten Handhaltung mit dem nach oben ausgestreckten Zeigefinger tippt der Anwender dem Pfeil P5 folgend in der Luft durch Abwinkeln seines Zeigefinders in eine horizontale Lage. Insbesondere in Verbindung mit Figur 3 sei darauf hingewiesen, dass zusätzliche, im Stand der Technik bekannte Klassifikationen für "Tippgesten" oder "Eingabegesten" bekannt sind und als im Rahmen der vorliegenden Erfindung erkenn- und klassifizierbar zu betrachten sind.

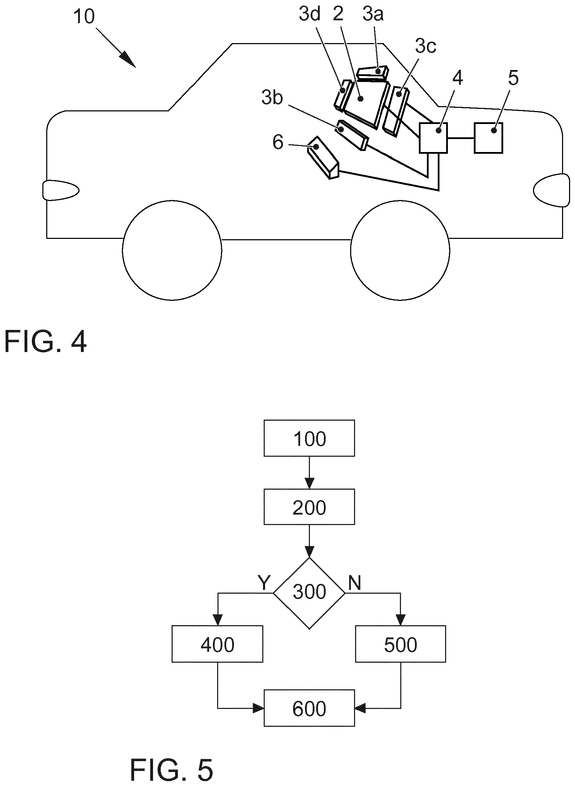

Figur 4 zeigt ein Fahrzeug 10 als Fortbewegungsmittel, in welchem eine erfindungsgemäße Vorrichtung zur Signalisierung einer erfolgreichen Gesteneingabe vorgesehen ist. Ein Bildschirm 2 ist als zentrale Anzeigeeinheit im Armaturenbrett des Fahrzeugs 10 eingebaut. Die vier Kanten des rechteckig ausgestalteten Bildschirms 2 sind durch die Kanten annähernd vollständig säumende balkenförmige Leuchtelemente 3a, 3b, 3c, 3d umgeben. Die balkenförmigen Leuchtelemente 3a, 3b, 3c, 3d enthalten (nicht dargestellte) Leuchtmittelstreifen. Zur Signalisierung erfindungsgemäß vorgeschlagener Animationen sind die balkenförmigen Leuchtelemente 3a, 3b, 3c, 3d sowie der Bildschirm 2 mit einem elektronischen Steuergerät 4 als Auswerteeinheit informationstechnisch verbunden. Das elektronische Steuergerät 4 umfasst einen (nicht dargestellten) Prozessor und ist zudem mit einem Flash-Speicher 5 als Datenspeicher für bei der Klassifikation verwendbare Referenzen informationstechnisch verbunden. Zudem ist eine Infrarot-LED-Leiste 6 als Sensorik vorgesehen und eingerichtet, dem elektronischen Steuergerät 4 ihre Sensorsignale zur Verfügung zu stellen. Über die Infrarot-LED-Leiste 6 erfasste Gesten des Anwenders können somit durch das elektronische Steuergerät 4 mittels im Flash-Speicher 5 abgespeicherter Referenzen klassifiziert und durch Animationen auf dem Bildschirm 2 und auf den balkenförmigen Leuchtelementen 3a, 3b, 3c, 3d dem Fahrer des Fahrzeugs 10 optisch signalisiert werden.

Figur 5 zeigt ein Flussdiagramm veranschaulichend Schritte eines erfindungsgemäßen Verfahrens. In Schritt 100 wird eine Geste eines Anwenders erfasst. In Schritt 200 wird die Geste klassifiziert und in Schritt 300 entschieden, ob der klassifizierten Geste entsprechend in Anbetracht des Betriebszustandes der erfindungsgemäßen Vorrichtung bzw. einer mit ihr verbundenen Datenverarbeitungseinrichtung ein Funktionsaufruf erfolgen kann. Sofern ein Funktionsaufruf erfolgen kann (Y), wird in Schritt 400 der erfolgreiche Funktionsaufruf durch Verwendung einer ersten Farbgebung der Animation und einer Verwendung einer ersten Trajektorie für die Animation signalisiert. Sofern der Funktionsaufruf durch die klassifizierte Geste nicht möglich ist (N), wird in Schritt 500 eine zweite Farbgebung in Verbindung mit einer zweiten (von der ersten Trajektorie verschiedene) Trajektorie zur Rückmeldung an den Anwender verwendet. Nach dem Signalisieren der erfolgreich erkannten Geste endet das Verfahren in Schritt 600.

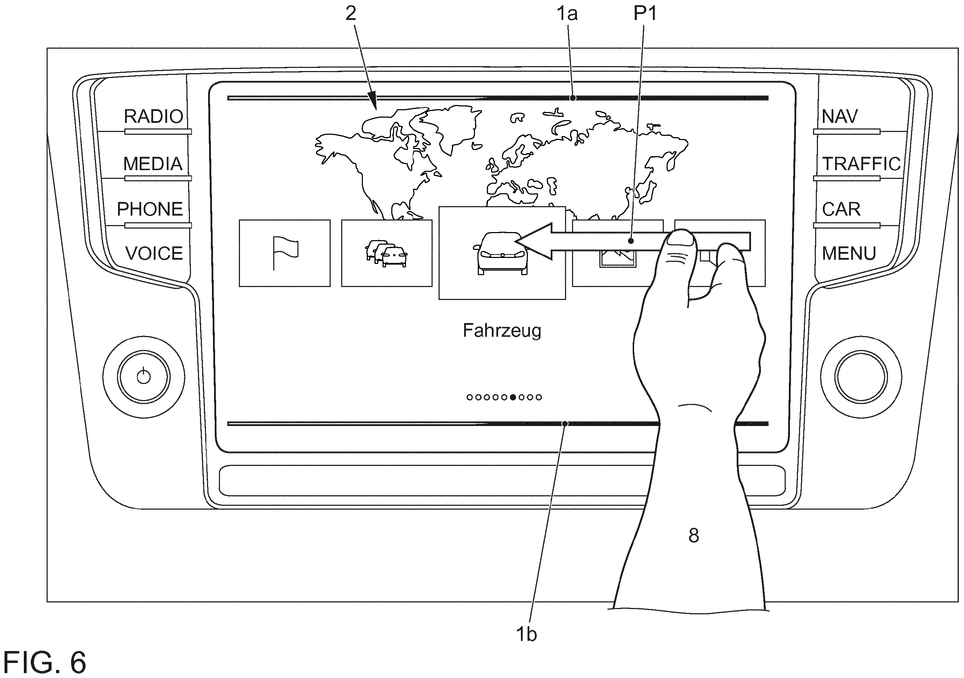

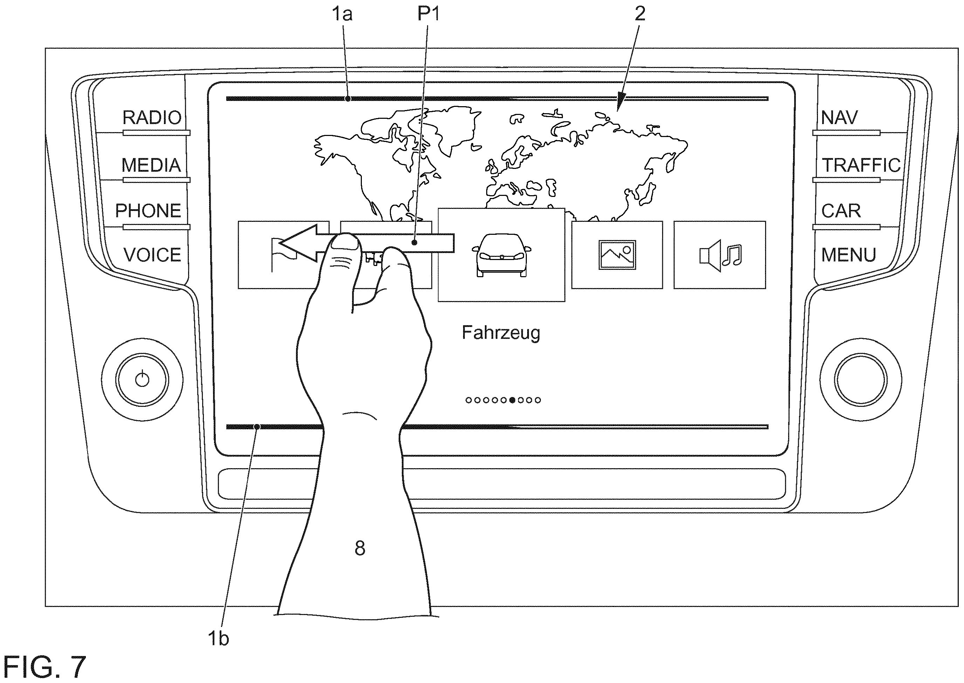

In Verbindung mit den Figuren 6 und 7 wird eine Signalisierung einer erfolgreichen Wischgeste nach links erläutert. Die Wischgeste wird durch die Hand 8 eines Anwenders vor einem Bildschirm 2 als Anzeigeeinheit eines Fahrzeugs ausgeführt. Die Richtung der Wischgeste wird durch den Pfeil P1 veranschaulicht. Entlang des oberen Randes des Bildschirms 2 und entlang des unteren Randes des Bildschirms 2 sind linear veränderliche Positionen 1a, 1b durch einen schmalen Bereich erhöhter Helligkeit (auch als "glow" bezeichnet) optisch hervorgehoben. Durch die Position am oberen und unteren Rand des Bildschirms 2 wird die Geste als horizontale Wischgeste signalisiert. Im Ansprechen auf die Positionsveränderung der Hand 8 des Anwenders zwischen der Figur 6 und der Figur 7 wird die horizontale Wischgeste als "nach links orientiert" klassifiziert. Da die Wischgeste zur Auswahl auf dem Bildschirm 2 dargestellter Funktionsgruppen vorgesehen ist und (nicht dargestellt) durch einen entsprechenden Funktionsaufruf quittiert wird, wird die klassifizierte Geste erfindungsgemäß durch eine erste Trajektorie und Farbgebung signalisiert, indem die hervorgehobene Position 1a linear entlang des oberen Randes des Bildschirms 2 der Hand 8 des Anwenders gefolgt ist. Entsprechendes gilt für die den unteren Rand des Bildschirms 2 entlanglaufende Animation der zweiten optisch hervorgehobenen Position 1b. Die Hervorhebung der Positionen 1a, 1b erfolgt durch eine (in den Figuren nicht dargestellte) blaue Färbung und eine erhöhte Helligkeit.

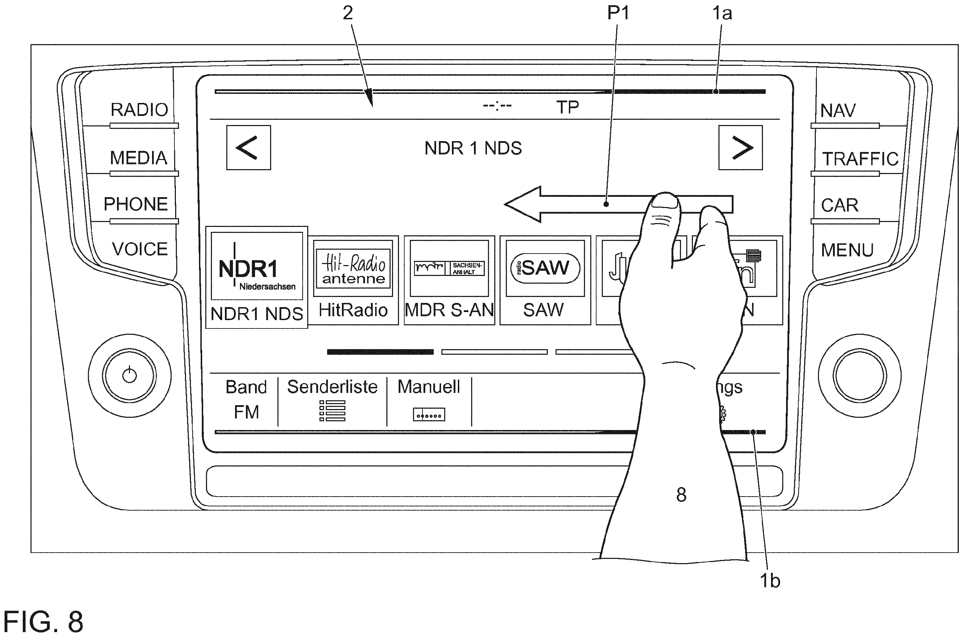

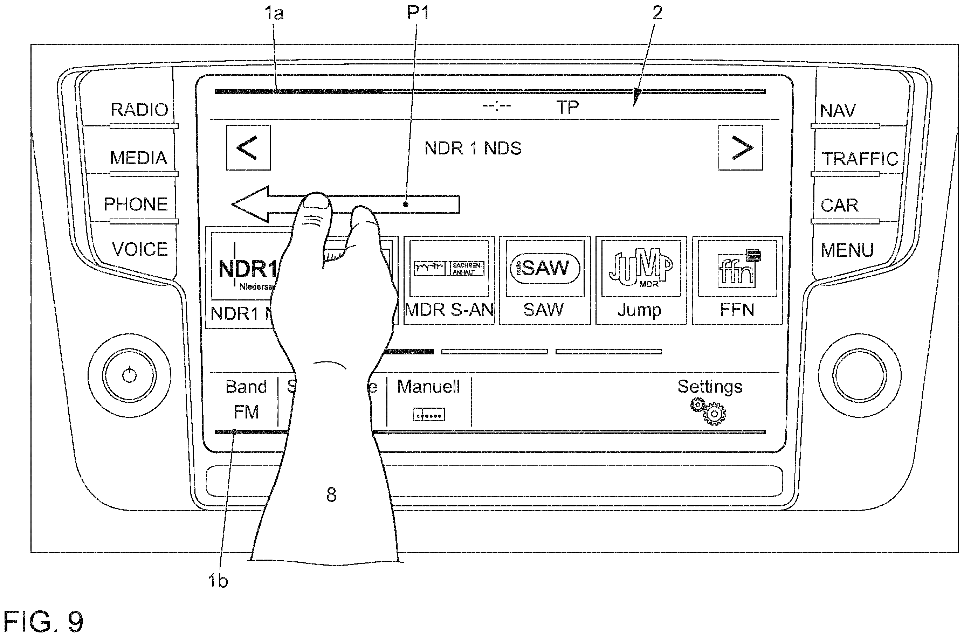

Die Figuren 8 und 9 veranschaulichen eine den Figuren 6 und 7 entsprechende Geste der Hand 8 des Anwenders, welche jedoch im Kontext eines geänderten Inhaltes des Bildschirms 2 ausgeführt wird. Für diesen Bildschirminhalt ist eine Wischgeste P1 zur Bedienung nicht vorgesehen. Entgegen den in den Figuren 6 und 7 dargestellten Positionen 1a, 1b sind daher die Positionen 1a, 1b in den Figuren 8 und 9 mit grauer Farbgebung ausgeführt. Auf diese Weise wird dem Anwender zwar die erfolgreiche Erkennung seiner Wischgeste P1 dargestellt, gleichzeitig jedoch auch die Erfolglosigkeit des mit ihr beabsichtigten Funktionsaufrufes angezeigt. Der Anwender hat seinen Irrtum somit nicht bei der Gesteneingabe selbst, sondern bei der Steuerung des dargestellten Menüs zu suchen.

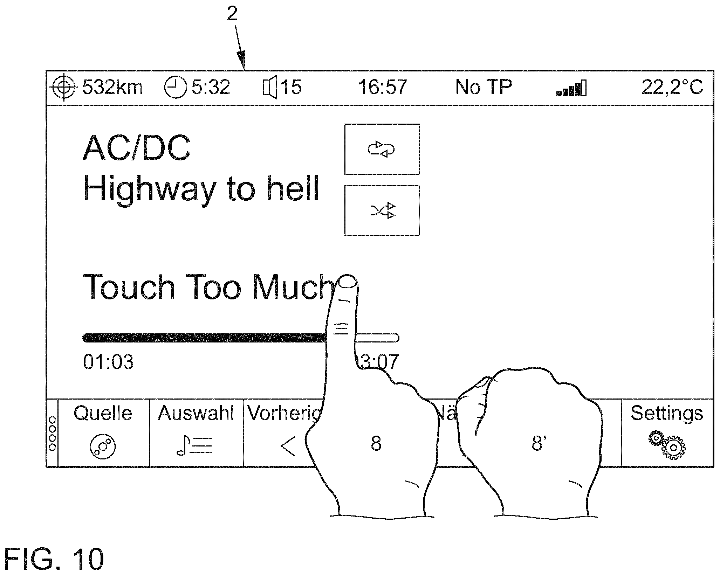

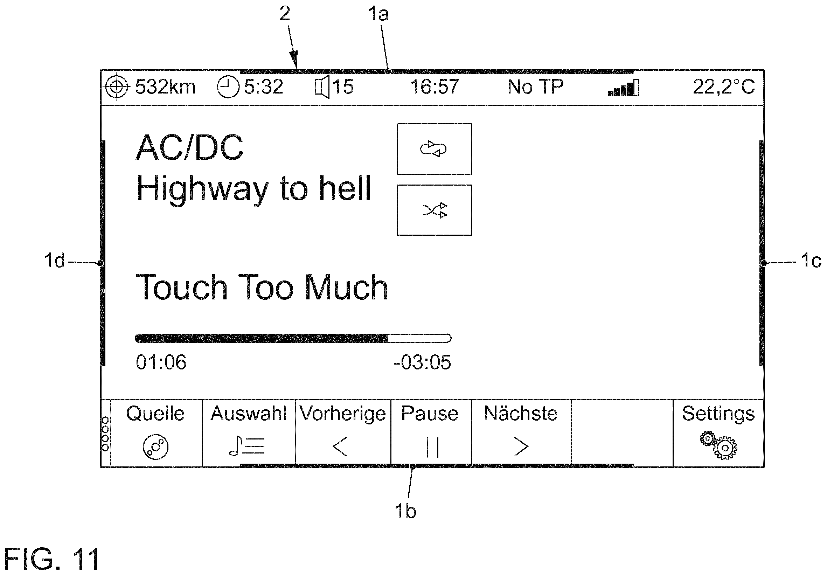

Figur 10 zeigt eine alternative Ansicht eines Bildschirms 2, vor welcher die Hand 8, 8' eines Anwenders eine Tippgeste ausführt. Die Hauptbewegungsrichtung dieser Tipp-Geste ist in die Anzeigeebene hinein orientiert. Zur Differenzierung der erfindungsgemäß erkannten Gestenklasse umlaufen -wie in Fig. 11 gezeigt- vier optisch hervorgehobene Positionen 1a, 1b, 1c, 1d die auf dem Bildschirm 2 dargestellte Anzeige in ihrem Randbereich. Dies erfolgt in Richtung des Uhrzeigersinns oder entgegen dem Uhrzeigersinn. Bei einem Umlauf im Uhrzeigersinn verschiebt sich die Position 1a entlang des oberen Randes nach rechts, die Position 1c entlang des rechten Randes nach unten, die Position 1b entlang des unteren Randes nach links und die Position 1d entlang des linken Randes nach oben. Für einen Umlauf entgegen dem Uhrzeigersinn kehren sich die Bewegungsrichtungen entsprechend um. Durch die vorbeschriebene Trajektorie und die blaue Farbgebung der optisch hervorgehobenen Positionen 1a, 1b, 1c, 1d wird dem Anwender das erfolgreiche Anhalten der Musikwiedergabe im Ansprechen auf die erkannte Tipp-Geste signalisiert.

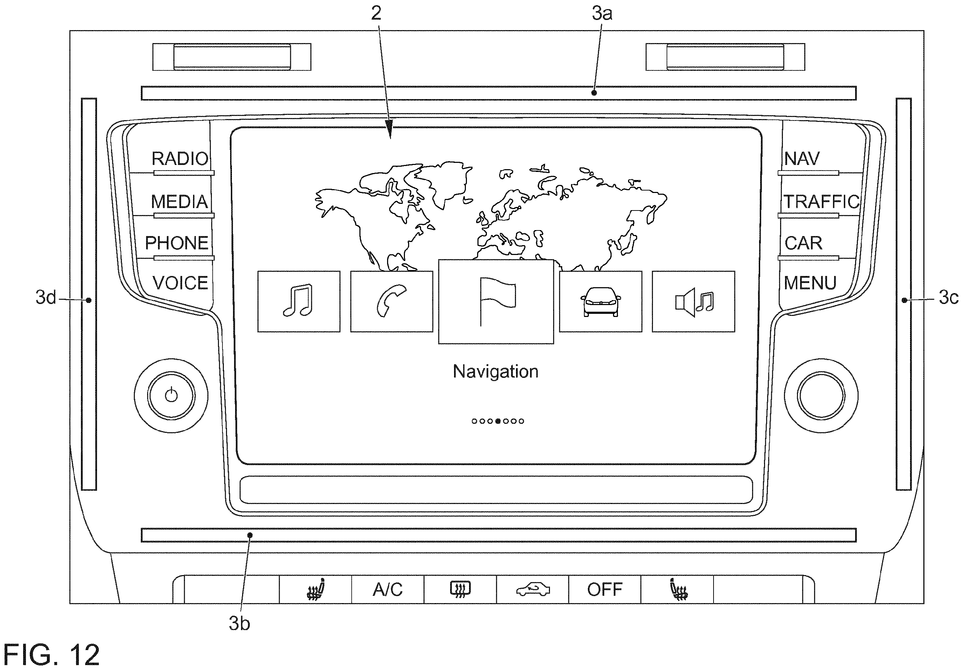

Figur 12 zeigt eine alternative Ausgestaltung einer erfindungsgemäßen Anwenderschnittstelle, bei welcher der Bildschirm 2 als erste Anzeigeeinheit durch vier balkenförmige Leuchtelemente 3a, 3b, 3c, 3d gesäumt ist. Dabei erstrecken sich die balkenförmigen Leuchtelemente 3a, 3b, 3c, 3d über die Grenzen der Ränder des Bildschirms 1 hinaus und sind im Wesentlichen parallel zu den Rändern orientiert. Die balkenförmigen Leuchtelemente 3a, 3b, 3c, 3d weisen eine Stärke von lediglich wenigen Millimetern auf. Ihr Anteil am Flächenbedarf ist entsprechend gering.

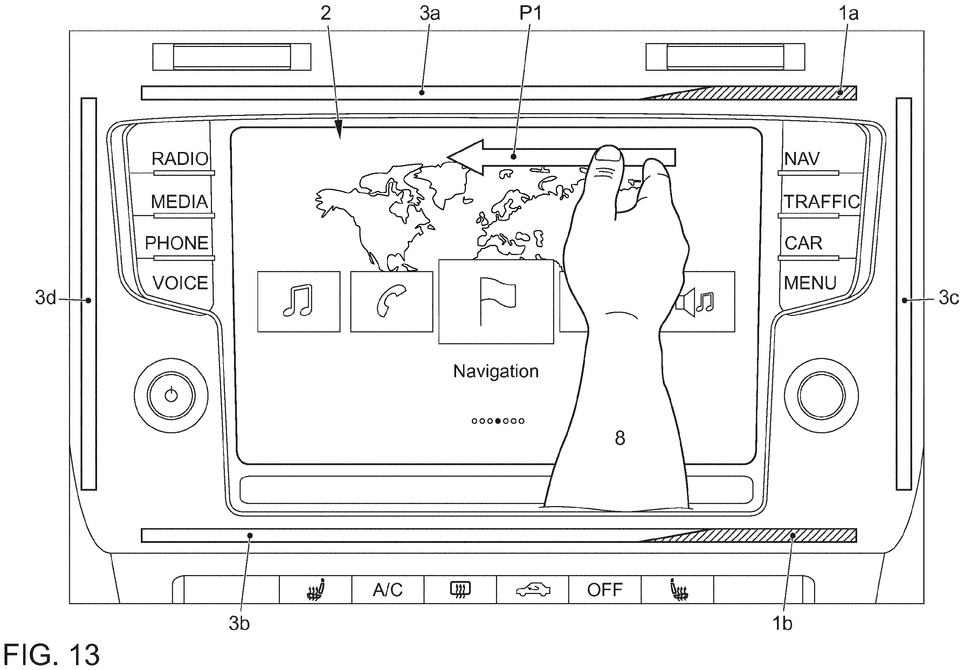

In Figur 13 bedient die Hand 8 eines Anwenders die erfindungsgemäße Anwenderschnittstelle durch eine nach links orientierte horizontale Wischgeste P1, im Ansprechen worauf ein erstes, oberhalb des Bildschirms 2 angeordnetes balkenförmigen Leuchtelement 3a eine erste Position 1a durch eine bläuliche Farbgebung in einem rechten Bereich optisch hervorhebt. Entsprechend ist auf einem unterhalb des Bildschirms 2 angeordneten balkenförmigen Leuchtelement 3b eine Position 1b durch eine bläuliche Färbung in seinem rechten Bereich optisch hervorgehoben. Die vertikalen balkenförmigen Leuchtelemente 3c, 3d links und rechts des Bildschirms 2 werden lediglich für die Signalisierung vertikaler Wischgesten und Gesten verwendet und sind daher ausgeschaltet. Der Verlauf der Animation (bzw. der ortsveränderlichen Position) 1a, 1b entspricht den in Verbindung mit den Figuren 6 und 7 bzw. Figuren 8 und 9 gemachten Ausführungen in Abhängigkeit der verfügbaren Menüoptionen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1a, 1b, 1c, 1d: Optisch hervorgehobene Position
- 2: Bildschirm
- 3a, 3b, 3c, 3d: Balkenförmige Leuchtelemente
- 4: Elektronisches Steuergerät
- 5: Flash-Speicher
- 6: Infrarot-LED-Leiste
- 8, 8': Hand des Anwenders
- 10: Fahrzeug
- 100, 200, 300, 400, 500, 600: Verfahrensschritte
- P1, P2, P3, P4, P5: Gesten

## Patentansprüche

1. Verfahren zur Signalisierung einer erfolgreichen Gesteneingabe durch einen Anwender, umfassend die Schritte:
- Erfassen (100) einer Geste (P1, P2, P3, P4, P5) eines Anwenders
- Klassifizieren (200) der Geste (P1, P2, P3, P4, P5), und
- Signalisieren (400, 500) der ermittelte Klasse durch Erzeugen einer Animation, welche eine zumindest abschnittsweise linear veränderliche Position (1a, 1b, 1c, 1d) entlang eines Randes eines der Gesteneingabe zugeordneten Bildschirms (2) optisch hervorhebt, **dadurch gekennzeichnet, dass** in Abhängigkeit der Tatsache, ob im Ansprechen auf die erkannte Geste (P1, P2, P3, P4, P5) eine anwendungsbezogene Funktion ausgeführt werden kann, die Animation unterschiedlich ausgestaltet ist.

2. Verfahren nach Anspruch 1, wobei die Position (1a, 1b, 1c, 1d) entsprechend einer für die ermittelte Klasse vordefinierte Trajektorie, insbesondere parallel zum Rand, verändert wird.

3. Verfahren nach Anspruch 1 oder 2, wobei
- das Klassifizieren (200) zumindest hinsichtlich einer Hauptbewegungsrichtung der Geste (P1, P2, P3, P4, P5) erfolgt, und/oder
- das Signalisieren (400, 500) entlang einer durch die ermittelte Klasse definierte Hauptbewegungsrichtung vorgegebenen Trajektorie erfolgt.

4. Verfahren nach einem der vorstehenden Ansprüche, wobei die Animation auf dem Bildschirm (2) und/oder auf einem zum Bildschirm (2) benachbart angeordneten, insbesondere linearen, Leuchtelement (3a, 3b, 3c, 3d) erzeugt wird.

5. Verfahren nach einem der vorstehenden Ansprüche, wobei die Geste (P1, P2, P3, P4, P5) frei im Raum durchgeführt wird.

6. Verfahren nach einem der vorstehenden Ansprüche, wobei die Animation einen Bereich einer erhöhten Helligkeit aufweist, wobei weiter von dem Bereich erhöhter Helligkeit durchquerte Bereiche in abnehmendem Maße nachleuchten.

7. Verfahren nach einem der vorstehenden Ansprüche, wobei die Animation senkrecht zur Richtung der Veränderung ihrer Position (1a, 1b, 1c, 1d) eine Ausdehnung aufweist, welche
- kleiner als ein Fünftel, insbesondere
- kleiner als ein Siebtel, bevorzugt
- kleiner als ein Neuntel,
der Erstreckung des Bildschirms (2) in derselben Richtung beträgt.

8. Verfahren nach Anspruch 1, wobei im Falle, dass eine anwendungsbezogene Funktion ausgeführt werden kann,
- die Animation eine erste Farbgebung und/oder eine erste Trajektorie aufweist, und im Falle, dass eine anwendungsbezogene Funktion nicht ausgeführt werden kann,
- die Animation eine zweite Farbgebung, insbesondere grau, und/oder eine zweite Trajektorie aufweist.

9. Vorrichtung umfassend
- eine erste Anzeigeeinheit (2, 3a, 3b, 3c, 3d),
- eine Sensorik (6), und
- eine Auswerteeinheit (4),
- wobei die Sensorik (6) eingerichtet ist, eine Geste (P1, P2, P3, P4, P5) eines Anwenders zu erfassen (100),
- die Auswerteeinheit (4) eingerichtet ist, die Geste (P1, P2, P3, P4, P5) zu klassifizieren (200), und
- die erste Anzeigeeinheit (2, 3a, 3b, 3c, 3d) eingerichtet ist, die ermittelte Klasse durch Erzeugen einer Animation, welche eine zumindest abschnittsweise linear veränderliche Position (1a, 1b, 1c, 1d) optisch hervorhebt, zu signalisieren (400, 500), **dadurch gekennzeichnet, dass** in Abhängigkeit der Tatsache, ob im Ansprechen auf die erkannte Geste (P1, P2, P3, P4, P5) eine anwendungsbezogene Funktion ausgeführt werden kann, die Animation unterschiedlich ausgestaltet ist.

10. Vorrichtung nach Anspruch 9, wobei
- die erste Anzeigeeinheit (2, 3a, 3b, 3c, 3d) einen Bildschirm (2) umfasst und die Animation auf dem Bildschirm (2) entlang zumindest eines Randes des Bildschirms (2) angezeigt wird, und/oder
- wobei mindestens eine, bevorzugt vier, weitere Anzeigeeinheiten (3a, 3b, 3c, 3d), insbesondere als balkenförmige Leuchtelemente ausgestaltet, jeweils entlang einer Kante der ersten Anzeigeeinheit (2) angeordnet sind, und welche eingerichtet ist bzw. sind, die Animation darzustellen.

11. Vorrichtung nach Anspruch 9 oder 10, wobei die Vorrichtung eingerichtet ist, ein Verfahren gemäß einem der vorstehenden Ansprüche 1 bis 8 durchzuführen.

12. Computerprogrammprodukt umfassend Instruktionen, welche, wenn sie auf einer Auswerteeinheit (4) einer Vorrichtung nach einem der Ansprüche 9 bis 11 ausgeführt werden, die Vorrichtung veranlassen, die Schritte eines Verfahrens nach einem der Ansprüche 1 bis 8 durchzuführen.

13. Fortbewegungsmittel, insbesondere Fahrzeug, umfassend eine Vorrichtung nach einem der Ansprüche 9 bis 11.

## Claims

1. Method for signaling a successful gesture input by a user, comprising the steps:
- detecting (100) a gesture (P1, P2, P3, P4, P5) of a user,
- classifying (200) the gesture (P1, P2, P3, P4, P5), and
- signaling (400, 500) the determined class by generating an animation which visually emphasizes a position (1a, 1b, 1c, 1d) along an edge of a screen (2) associated with the gesture input, this position being linearly variable at least on a sectional basis, **characterized in that** the animation takes a different form depending on whether an application-related function can be executed in response to the recognized gesture (P1, P2, P3, P4, P5).

2. Method according to Claim 1, wherein the position (1a, 1b, 1c, 1d) is changed corresponding to a trajectory predefined for the determined class, in particular parallel to the edge.

3. Method according to Claims 1 or 2, wherein
- classification (200) takes place at least with regard to a main movement direction of the gesture (P1, P2, P3, P4, P5), and/or
- signaling (400, 500) takes place along a trajectory predetermined by the main movement direction defined by the determined class.

4. Method according to any one of the preceding claims, wherein the animation is generated on the screen (2) and/or on an in particular linear lighting element (3a, 3b, 3c, 3d) arranged adjacent to the screen (2).

5. Method according to any one of the preceding claims, wherein the gesture (P1, P2, P3, P4, P5) is performed freely in space.

6. Method according to any of the preceding claims, wherein the animation has an area of increased brightness, wherein additional regions traversed by the region of increased brightness are illuminated to a decreasing extent.

7. Method according to any one of the preceding claims, wherein the animation has an extension perpendicular to the direction of the change in its position (1a, 1b, 1c, 1d), which extension is
- less than one fifth, in particular
- less than one seventh, preferably
- less than one ninth
of the extent of the screen (2) in the same direction.

8. Method according to Claim 1, wherein, in the event that an application-related function can be executed,
- the animation has a first coloration and/or a first trajectory and, in the event that an application-related function cannot be executed,
- the animation has a second coloration, in particular gray, and/or a second trajectory.

9. Device comprising
- a first display unit (2, 3a, 3b, 3c, 3d),
- a sensor system (6), and
- an evaluation unit (4),
- wherein the sensor system (6) is configured to detect (100) a gesture (P1, P2, P3, P4, P5) of a user,
- the evaluation unit (4) is configured to classify (200) the gesture (P1, P2, P3, P4, P5), and
- the first display unit (2, 3a, 3b, 3c, 3d) is configured to signal (400, 500) the determined class by generating an animation which visually emphasizes a position (1a, 1b, 1c, 1d) that can be linearly variable at least on a sectional basis, **characterized in that** the animation takes a different form depending on whether an application-related function can be executed in response to the detected gesture (P1, P2, P3, P4, P5).

10. Device according to Claim 9, wherein
- the first display unit (2, 3a, 3b, 3c, 3d) comprises a screen (2), and the animation is displayed on the screen (2) along at least one edge of the screen (2), and/or
- wherein at least one, preferably four, additional display units (3a, 3b, 3c, 3d), in particular taking the form of bar-shaped lighting elements, are respectively arranged along an edge of the first display unit (2) and is or are configured to display the animation.

11. Device according to Claims 9 or 10, wherein the device is configured to implement a method according to any one of the preceding Claims 1 to 8.

12. Computer program product comprising instructions which, when executed in an evaluation unit (4) of a device according to any one of Claims 9 to 11, induce the device to implement the steps of a method according to any one of Claims 1 to 8.

13. Means of locomotion, in particular a vehicle, comprising a device according to any one of Claims 9 to 11.

## Revendications

1. Procédé pour signaler une saisie gestuelle réussie de la part d'un utilisateur, comprenant les étapes suivantes :
- détecter (100) un geste (P1, P2, P3, P4, P5) d'un utilisateur
- classifier (200) le geste (P1, P2, P3, P4, P5) et
- signaler (400, 500) la classe déterminée par la création d'une animation, qui met visuellement en évidence une position (1a, 1b, 1c, 1d) à variation linéaire au moins partielle sur un bord d'un écran (2) associé à la saisie gestuelle,
**caractérisé en ce que,** en fonction de si, en réponse au geste reconnu (P1, P2, P3, P4, P5), une fonction liée à une application peut être réalisée, l'animation est présentée de manière différente.

2. Procédé selon la revendication 1, dans lequel la position (1a, 1b, 1c, 1d) correspondant à une trajectoire prédéfinie pour la classe déterminée, est modifiée, notamment parallèlement au bord.

3. Procédé selon la revendication 1 ou 2, dans lequel
- la classification (200) est effectuée au moins relativement à une direction principale de déplacement du geste (P1, P2, P3, P4, P5) et/ou
- la signalisation (400, 500) est effectuée le long d'une trajectoire prédéfinie par la direction principale de déplacement définie par la classe déterminée.

4. Procédé selon une des revendications précédentes, dans lequel l'animation est créée sur l'écran (2) et/ou sur un élément lumineux (3a, 3b, 3c, 3d), notamment linéaire, disposé à proximité de l'écran (2).

5. Procédé selon une des revendications précédentes, dans lequel le geste (P1, P2, P3, P4, P5) est réalisé librement dans l'espace.

6. Procédé selon une des revendications précédentes, dans lequel l'animation présente une zone de luminosité supérieure, dans lequel, en outre, des zones traversées par la zone de luminosité supérieure sont luminescentes de manière décroissante.

7. Procédé selon une des revendications précédentes, dans lequel l'animation présente, perpendiculairement à la direction de modification de sa position (1a, 1b, 1c, 1d), un allongement, qui
- est inférieur à un cinquième, notamment
- inférieur à un septième, de préférence
- inférieur à un neuvième,
de l'étendue de l'écran (2) dans la même direction.

8. Procédé selon la revendication 1, dans lequel dans le cas où une fonction liée à l'application peut être réalisée,
- l'animation présente une coloration et/ou une première trajectoire et dans le cas où une fonction liée à l'application ne peut pas être réalisée,
- l'animation présente une deuxième coloration, notamment grise et/ou une deuxième trajectoire.

9. Dispositif comprenant
- une première unité d'affichage (2, 3a, 3b, 3c, 3d),
- un système de capteurs (6) et
- une unité de traitement (4),
- dans lequel le système de capteurs (6) est conçu pour détecter (100) un geste (P1, P2, P3, P4, P5) d'un utilisateur,
- l'unité de traitement (4) est conçue pour classer (200) le geste (P1, P2, P3, P4, P5) et
- la première unité d'affichage (2, 3a, 3b, 3c, 3d) est conçue pour signaler (400, 500) la classe déterminée par la création d'une animation, qui met visuellement en évidence une position (1a, 1b, 1c, 1d) à variation linéaire au moins partielle, **caractérisé en ce que** en fonction de si, en réponse au geste reconnu (P1, P2, P3, P4, P5), une fonction liée à l'application peut être réalisée, l'animation est présentée de manière différente.

10. Dispositif selon la revendication 9, dans lequel
- la première unité d'affichage (2, 3a, 3b, 3c, 3d) comprend un écran (2) et l'animation sur l'écran (2) est présentée le long d'au moins un bord de l'écran (2) et/ou
- dans lequel au moins une, de préférence quatre, autres unités d'affichage (3a, 3b, 3c, 3d), notamment présentées sous forme d'éléments lumineux de type barres, sont disposées le long d'une arête de la première unité d'affichage (2) et est ou sont conçues pour représenter l'animation.

11. Dispositif selon la revendication 9 ou 10, lequel étant conçu pour exécuter un procédé selon l'une des revendications précédentes 1 à 8.

12. Produit de programme informatique comprenant des instructions qui, lorsqu'elles sont exécutées sur une unité de traitement (4) d'un dispositif selon l'une des revendications 9 à 11, amènent le dispositif à exécuter les étapes d'un procédé selon l'une des revendications 1 à 8.

13. Moyen de locomotion, en particulier véhicule, comprenant un dispositif selon l'une des revendications 9 à 11.
